# EUROPÄISCHE PATENTSCHRIFT

(11) **EP 2 025 907 B1**
(45) Veröffentlichungstag und Bekanntmachung des Hinweises auf die Patenterteilung: **08.04.2015**
(21) Anmeldenummer: 08010149.6
(22) Anmeldetag: 04.06.2008
(51) Int. Cl.: F02K 9/44, F02K 9/70

(54) **Raketenmotor**
Rocket engine
Moteur de fusées

(30) Priorität: 04.08.2007 DE 102007036883
(43) Veröffentlichungstag der Anmeldung: 18.02.2009
(60) Teilanmeldung: 14002062.9
(73) Patentinhaber: Bayern-Chemie Gesellschaft für flugchemische Antriebe mbH, 84544 Aschau a. Inn (DE)
(72) Erfinder: Ramsel, Jürgen, 84559 Kraiburg (DE); Stierle, Ralf, 83533 Edling (DE); Naumannl, Karl Wieland, 84453 Mühldorf (DE)
(74) Vertreter: vP-IP von Puttkamer Berngruber Loth Spuhler

(56) Entgegenhaltungen:
- EP-A2- 1 321 505
- DE-A1- 4 301 671
- DE-A1-102005 030 437
- DE-C1- 19 810 638
- US-A- 2 921 846
- US-A- 3 010 279
- US-A- 3 105 352
- US-A- 3 154 041
- US-A- 3 253 408
- US-A- 3 318 741
- US-A- 6 158 693

## Beschreibung

Die Erfindung bezieht sich auf einen Raketenmotor, insbesondere für Starttriebwerke, nach dem Oberbegriff des Anspruchs 1.

Ein solcher Raketenmotor ist z.B. aus DE 10 2005 030 437 A1 bekannt.

Als Raketentreibstoffe werden neben Flüssigtreibstoffen und Festtreibstoffen auch gelförmige hypergole Treibstoffe, beispielsweise aus dem Treibstoffpaar Monomethylhydrazin und Salpetersäure, sogenannte IRFNA (inhibited red fuming nitric acid) verwendet. Die Förderung des Gels vom Treibstofftank zur Brennkammer erfolgt dabei mit einem explosivstoffhaltigen Gasgenerator, der das Gel in dem Tank bedrückt.

Während die Einsatzmöglichkeiten von Flüssigraketen durch die Gefahr des Auslaufens umweltbelastender Flüssigkeiten, von Handhabungsfehlern und Unfällen erheblich eingeschränkt werden, unterliegen Festtreibstoffe als langsam abbrennende Explosivstoffe und damit Gefahrenstoffe besonderen gesetzlichen Regelungen, insbesondere hinsichtlich Herstellung, Lagerung, Transport, Handhabung, Verarbeitung, Einsatz und Entsorgung. Dies erschwert Herstellung, Logistik und Einsatz von Feststoffraketenmotoren in jeder Hinsicht. Gleiches gilt für andere Raketen mit explosivstoffhaltigen Komponenten, wie einen explosivstoffhaltigen Gasgenerator aufweisende Raketenmotoren mit gelförmigen hypergolen Treibstoffen, die hochentzündlich, extrem reaktionsfreudig, hochgiftig, zum Teil sogar krebserregend und aufgrund der Salpetersäure zudem stark ätzend sind.

Aufgabe der Erfindung ist es, einen sowohl in der Herstellung wie in der Lagerung, im Transport, der Handhabung, der Verarbeitung, im Einsatz und hinsichtlich der Entsorgung unproblematischen Raketenmotor zur Verfügung zu stellen.

Dies wird erfindungsgemäß mit dem im Anspruch 1 gekennzeichneten Raketenmotor erreicht. In den Ansprüchen 2 bis 5 sind vorteilhafte Ausgestaltungen des erfindungsgemäßen Raketenmotors wiedergegeben. Der Anspruch 6 hat ein mit dem erfindungsgemäßen Raketenmotor versehenes - Starttriebwerk für ein Flugobjekt zum Gegenstand, welches durch die Ansprüche 7 bis 12 in vorteilhafter Weise weiter ausgebildet ist.

Nach der Erfindung wird der Raketenmotor mit einem gelförmigen Treibstoff auf der Basis eines bei Raumtemperatur flüssigen, wenigstens eine Nitro-Gruppe enthaltenden Kohlenwasserstoffs, gegebenenfalls auch eines Gemisches solcher Kohlenwasserstoffe angetrieben. Die Fördereinrichtung für den gelförmigen Treibstoff besteht ausschließlich aus Inertkomponenten.

Der die wenigstens eine Nitro-Gruppe enthaltende Kohlenwasserstoff kann ein aromatischer oder ein aliphatischer Kohlenwasserstoff sein, beispielsweise ein Alkan, das mit einer oder mehreren Nitro-Gruppen substituiert ist. So hat sich Nitroethan und vor allem Nitromethan als geeignet erwiesen.

Um ihn in die Gelform überzuführen, wird der bei Raumtemperatur flüssige Kohlenwasserstoff mit einem Gelbildner versetzt. Dieser Gelbildner kann ein anorganischer Gelbildner, z. B. pyrogene Kieselsäure, wie Aerosil® sein oder ein organischer Gelbildner, beispielsweise sogenannte LMOGs.

Das Triebwerk kann auch als Zweistoff-Triebwerk, gegebenenfalls Mehrstoff-Triebwerk, ausgeführt werden, bevorzugt mit einem Treibstoffgel, wie oben dargestellt, und einem Oxidator, ebenfalls bevorzugt in Gelform.

Dabei wird als Oxidator vorzugsweise ein wasserlösliches Salz auf Nitramid- oder Nitrat-Basis verwendet, gegebenenfalls auch ein Gemisch solcher Salze. Vorzugsweise wird zur Gelbildung eine z. B. wässrige Lösung eines oder mehrere solcher Salze verwendet, die mit einem oder mehreren Gelbildnern und gegebenenfalls mit weiteren Additiven vermischt wird. Die Konzentration des Salzes bzw. die Gesamtkonzentration der Salze in der wässrigen Lösung kann beispielsweise 20 bis 90 Gew.% betragen. Anstelle von reinem Wasser kann das Salz z. B. auch in einem Gemisch aus Wasser und einem wasserlöslichen Lösungsmittel, wie z. B. einem Alkohol, gelöst sein.

Als wasserlösliche Salze können z. B. Alkali- oder Erdalkalisalze verwendet werden, vorzugsweise werden jedoch Ammonium- oder Hydroxylammoniumsalze eingesetzt. Als besonders geeignet haben sich Ammoniumdinitramid und Hydroxylammoniumnitrat als Oxidatoren erwiesen.

Der gelförmige Treibstoff des erfindungsgemäßen Raketenmotors, der aus einem Treibstoff auf der Basis eines bei Raumtemperatur flüssigen, wenigstens eine Nitro-Gruppe enthaltenden Kohlenwasserstoffs und einem Gelbildner besteht, ist nicht explosionsgefährlich. Damit weist er bei Beschädigung oder Unfällen ein insensitives Verhalten auf.

Um die Fördereinrichtung zum Fördern des gelförmigen Treibstoffs von dem Treibstofftank zu der Brennkammer des Raketenmotors inert auszubilden, kann eine für gelförmige Stoffe geeignete Pumpe vorgesehen sein. Die Pumpe zur Förderung des gelförmigen Treibstoffs kann eine mechanische, elektrische oder hydraulische Pumpe sein.

Vorzugsweise ist erfindungsgemäß der gelförmige Treibstoff in einer Treibstoffkammer untergebracht, die mit wenigstens einer Austrittsöffnung versehen ist, die mit der Brennkammer verbunden ist. Die Treibstoffkammer ist dabei so ausgebildet, dass ihr Volumen sich bei Druckbeaufschlagung von außen verkleinert, wodurch der gelförmige Treibstoff durch die Austrittsöffnung der Treibstoffkammer in die Brennkammer gefördert wird.

Erfindungsgemäß ist die Treibstoffkammer durch einen mit dem gelförmigen Treibstoff gefüllten Beutel gebildet sein, der in einem Behälter angeordnet ist, der z. B. mit einem Druckgas unter Druck gesetzt wird.

In einer nicht erfindungsgemäßen Ausführungsform ist es möglich, einen Behälter zu verwenden, der durch ein Diaphragma oder dergleichen elastische Wand in zwei Kammern geteilt ist, wobei die eine Kammer, die mit Treibstoff gefüllte Treibstoffkammer bildet, während die andere Kammer mit Druckgas unter Druck gesetzt wird, um den gelförmigen Treibstoff aus der Austrittsöffnung der Treibstoffkammer zu der Brennkammer des Raketenmotors zu drücken.

In einer nicht erfindungsgemäßen Ausführungsform ist jedoch ein Zylinder vorgesehen, in dem ein Kolben verschiebbar angeordnet ist, der mit einem Druck beaufschlagbar ist und die mit dem gelförmigen Treibstoff gefüllte Treibstoffkammer verschließt. Zur Druckbeaufschlagung des Kolbens kann ein inertes Mittel, z. B. eine Feder oder ein Druckgas vorgesehen sein. Auch ist es möglich, den Zylinder so auszubilden, dass der Kolben die Treibstoffkammer von einer Kammer trennt, die mit dem Druckgas, z. B. Druckluft, gefüllt ist.

Die Treibstoffleitung, die die wenigstens eine Austrittsöffnung in der Treibstoffkammer mit der Brennkammer des Raketenmotors verbindet, ist mit einem Absperrorgan, beispielsweise einem Hahn, versehen. Wenn das Absperrorgan geöffnet wird, wird der in der Treibstoffkammer unter Druck stehende gelförmige Treibstoff in die Brennkammer des Raketenmotors gedrückt. Das Absperrorgan kann auch als Regulierungsventil ausgebildet sein, das mit einer Elektronik betätigt werden kann.

Zum Zünden des Treibstoffs wird entweder eine ihrerseits aus inerten Komponenten bestehende, also keine explosionsfähigen Stoffe aufweisende Anzündvorrichtung, beispielsweise eine Zündkerze verwendet oder z. B. eine Glühkerze oder eine katalytische Anzündung.

Da der gelförmige Treibstoff aufgrund seiner Insensibilität relativ anzündträg ist, wird jedoch vorzugsweise eine externe Anzündvorrichtung verwendet, also beispielsweise ein z. B. mit Wasserstoff und Luft betriebener Gasbrenner, der z. B. an der Startvorrichtung vorgesehen sein kann, mit der die Rakete gestartet wird.

Da der erfindungsgemäße Raketenmotor keinen explosionsfähigen Treibstoff und auch sonst keine explosionsfähigen Komponenten enthält, also explosivstofffrei ist, aber auch keine ätzenden oder hochgiftigen Stoffe, ist er sowohl unter Umwelt- wie Sicherheitsaspekten weitgehend unproblematisch. Lagerung, Herstellung, Transport und Entsorgung des erfindungsgemäßen Raketenmotors sind daher mit geringen Kosten verbunden. Auch ist kein treibstoff-spezifischer Personenschutz erforderlich. Genehmigungsverfahren können zügig abgewickelt werden. Der Treibstoff ist kostengünstig und leicht versorg- und handhabbar. Zudem führt er nur zu einer geringen Strahlsignatur. Der erfindungsgemäße Raketenmotor ist zudem wieder verwendbar, weil kein oder nur ein Minimalaustausch von Verschleißteilen erforderlich ist. Damit können die Betriebskosten pro Einsatz zusätzlich erheblich reduziert werden.

Der erfindungsgemäße Raketenmotor ist insbesondere als Starttriebwerk (Booster) für Flugobjekte geeignet. Das Flugobjekt kann ein Flugzeug oder ein Marschflugkörper sein, insbesondere ist er für eine Drohne, also ein unbemanntes, in der Regel wieder verwendbares Flugzeug, einsetzbar. Die Brenndauer ist dabei normalerweise kürzer als 3 Sekunden. Die Brenndauer des erfindungsgemäßen Raketenmotors kann jedoch auch größer sein und z. B. 10 Sekunden und mehr betragen.

Dabei werden an dem Flugobjekt in der Regel zwei mit ihrer Längsachse zur Flugobjektlängsachse parallel angeordnete Starttriebwerke angebracht. Um eine Drehung des Flugobjekts um die Hochachse zu verhindern, werden die Schubdüsen der beiden Booster auf den Schwerpunkt des Flugobjekts bzw. des Gesamtsystems aus Flugobjekt und Boostern ausgerichtet. Dazu ist die Brennkammer mit der Düse des erfindungsgemäßen Starttriebwerks vorzugsweise verschwenkbar ausgebildet.

Das erfindungsgemäße Starttriebwerk kann mit einer Bergeeinrichtung versehen sein. Die Bergeeinrichtung kann z. B. durch einen Fallschirm und/oder ein Rückholseil gebildet sein.

Während ein Fallschirm für eine Abbremsung und Landung bevorzugt bei Einsatz über Land eingesetzt wird, ist ein Rückholseil vor allem bei Einsatz über Wasser, insbesondere von einem Schiff aus, zweckmäßig, da dann auf ein spezifisches Bergemanöver verzichtet werden kann.

Die Treibstoffkammer des erfindungsgemäßen Raketenmotors kann mit der abgemessenen Treibstoffmenge gefüllt werden, die für einen Startvorgang erforderlich ist. Auch ist es möglich, das Absperrorgan in der Treibstoffleitung zwischen Treibstoffkammer und Brennkammer beispielsweise nach einer vorgegebenen Brenndauer oder bei Erreichen einer vorgegebenen Geschwindigkeit zu schließen, sodass der in der Brennstoffkammer verbleibende Resttreibstoff eventuell für einen späteren Einsatz genutzt werden kann.

Um Beschädigungen beispielsweise bei der Landung zu verhindern, weist das erfindungsgemäße Starttriebwerk einen Schutzrahmen auf, der z. B. als eine Art Käfig aus am Umfang angeordneten rahmen- oder ringfömigen Profilen bestehen kann, die durch Längsprofile miteinander verbunden sind. In diesem Schutzrahmen sind die Treibstoffkammer, einschließlich Fördereinrichtung für den gelförmigen Treibstoff sowie die Brennkammer mit der Düse befestigt.

Die Maßnahmen, die zwischen zwei Einsätzen des erfindungsgemäßen, wieder verwendbaren Starttriebwerks erforderlich sind, bestehen im Wesentlichen aus dem Befüllen der Treibstoffkammer mit dem gelförmigen Treibstoff und bei einer Fördereinrichtung mit einer Druckgaskammer dem Befüllen der Druckgaskammer mit Druckluft oder einem anderen Druckgas.

Das erfindungsgemäße explosivstofffreie Starttriebwerk ist vor allem für Einsätze an Orten geeignet, an denen umfangreiche Sicherungsmaßnahmen unmöglich oder aufwendig sind, insbesondere auf Schiffen. Die zwischen zwei Einsätzen erforderlichen Maßnahmen können auch vor Ort durchgeführt werden. Dabei kann eine Wiederbefüllungsstation vorgesehen sein, die in einem z. B. mittels Lkw transportablen, gegebenenfalls auch an ein Schiff adaptierbaren Container untergebracht ist.

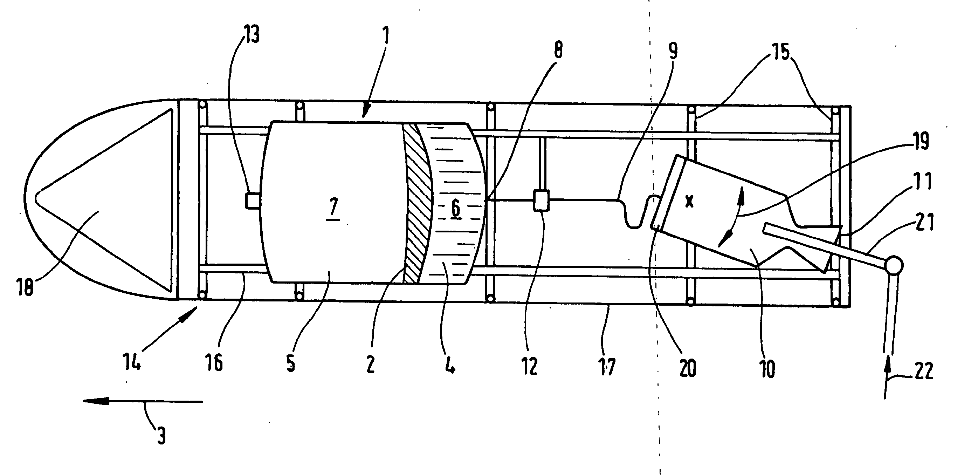

Nachstehend ist eine nicht erfindungsgemäße Ausführungsform Raketenmotors anhand der Zeichnung beispielhaft näher erläutert, deren einzige Figur schematisch einen Längsschnitt durch ein Starttriebwerk zeigt.

Danach weist das Starttriebwerk einen zylinderförmigen Behälter 1 auf, in dem ein Kolben 2 verschiebbar angeordnet ist. Die in Flugrichtung 3 des Starttriebwerkes hintere Kammer 4 ist mit einem gelförmigen Treibstoff 6 z. B. aus einem Gemisch aus Nitromethan, Additiven und Gelbildner gefüllt, und die andere, vordere Kammer 5 mit Druckluft 7. Wenn die hintere Stirnwand des Behälters 1 bzw. der Treibstoffkammer 4 konvex nach außen gewölbt ist, ist der Kolben 2 vorzugsweise in gleicher Weise konvex gewölbt.

Die Treibstoffkammer 4 weist eine Austrittsöffnung 8 auf, von der eine Treibstoffleitung 9 zu der Brennkammer 10 mit der Schubdüse 11 führt. In der Treibstoffleitung 9 ist als Absperrorgan 12 ein Hahn angeordnet. Die Druckgaskammer 5 ist über ein Ventil 13 z. B. mit Druckluft befüllbar.

Der zylinderförmige Behälter 1 mit der Treibstoffkammer 4 und der Druckgaskammer 5 sowie die Brennkammer 10 mit der daran starr befestigten Düse 11 sind an einem Schutzrahmen 14 befestigt, der aus ringförmigen Profilen 15 am Umfang und Längsprofilen 16 besteht, die die ringförmigen Profile 15 miteinander verbinden. Der Rahmen 14 ist mit einer Verkleidung 17 versehen. An der Spitze des Raketentriebwerks ist hier ein Fallschirm 18 untergebracht.

Die Brennkammer 10 ist in Richtung des Doppelpfeiles 19 verschwenkbar. Die Treibstoffleitung 9 ist dazu flexibel ausgebildet. Die Treibstoffleitung 9 ist an einen Injektorkopf 20 in der Brennkammer angeschlossen, der nicht dargestellte Austrittsöffnungen für den gelförmigen Treibstoff 6 aufweist.

Zum Anzünden des gelförmigen Treibstoffs in der Brennkammer 10 ist an der nicht dargestellten Startvorrichtung ein Gasbrenner 21 vorgesehen, der in die Düse 11 ragt und über eine Leitung 22 mit einem Brenngas, beispielsweise Wasserstoff und einem Oxidatorgas beispielsweise Sauerstoff oder Druckluft versorgt wird.

## Patentansprüche

1. Raketenmotor mit einer mit einem gelförmigen Treibstoff (6) gefüllten Treibstoffkammer (4) und einer Fördereinrichtung zur Förderung des Treibstoffs von der Treibstoffkammer (4) zur Brennkammer (10), wobei der gelförmige Treibstoff (6) aus einem Treibstoff auf der Basis wenigstens eines bei Raumtemperatur flüssigen, wenigstens eine NitroGruppe enthaltenden Kohlenwasserstoffs, dem ein Gelbildner zugemischt ist, und die Fördereinrichtung für den gelförmigen Treibstoff (6) aus inerten Komponenten besteht **dadurch gekennzeichnet, dass** die Treibstoffkammer (4) durch einen mit dem Treibstoff gefüllten Beutel gebildet ist, der in einem Behälter (1) angeordnet ist, der mit Druckgas beaufschlagt ist.

2. Raketenmotor nach Anspruch 1, **dadurch gekennzeichnet, dass** der gelförmige Treibstoff (6) zusammen mit einem Oxidator eingesetzt wird.

3. Raketenmotor nach Anspruch 2, **dadurch gekennzeichnet, dass** der Oxidator gelförmig ist.

4. Raketenmotor nach Anspruch 2 oder 3, **dadurch gekennzeichnet, dass** der Anteil des Oxidators wenigstens 10 Gew.% des Treibstoffs beträgt.

5. Raketenmotor nach Anspruch 1, **dadurch gekennzeichnet, dass** das Volumen der Treibstoffkammer (4) zur Bildung einer aus inerten Komponenten bestehenden Fördereinrichtung für den gelförmigen Treibstoff (6) durch Druckbeaufschlagung von außen verkleinerbar ist.

6. Starttriebwerk für ein Flugobjekt mit einem Raketenmotor nach einem der vorstehenden Ansprüche.

7. Starttriebwerk nach Anspruch 6, **dadurch gekennzeichnet, dass** es eine Bergeeinrichtung aufweist.

8. Starttriebwerk nach Anspruch 6 oder 7, **dadurch gekennzeichnet, dass** es einen Schutzrahmen (14) aufweist, in dem die Treibstoffkammer (4), die Fördereinrichtung für den gelförmigen Treibstoff (6) und die Brennkammer (10) mit der Schubdüse (11) befestigt sind.

9. Starttriebwerk nach einem der Ansprüche 6 bis 8, **dadurch gekennzeichnet, dass** die Brennkammer (10) mit der Schubdüse (11) verschwenkbar ausgebildet ist.

10. Startriebwerk nach einem der Ansprüche 6 bis 9, **dadurch gekennzeichnet, dass** die Brennkammer (10) mit der Schubdüse (11) in mehr als einer Orientierung fixiert werden kann.

11. Starttriebwerk nach einem der Ansprüche 6 bis 9, **dadurch gekennzeichnet, dass** als Anzündvorrichtung für den der Brennkammer (10) zugeführten gelförmigen Treibstoff (6) eine externe Anzündvorrichtung verwendet wird.

12. Starttriebwerk nach Anspruch 11, **dadurch gekennzeichnet, dass** die Anzündvorrichtung durch einen Gasbrenner (21) gebildet wird.

## Claims

1. A rocket motor having a propellant chamber (4) filled with a gel-type propellant (6) and a conveying device for conveying the propellant from the propellant chamber (4) to the combustion chamber (10), wherein the gel-type propellant (6) consists of a propellant based on at least one hydrocarbon which is liquid at room temperature, contains at least one nitro group and is mixed with a gelling agent, and wherein the conveying device for the gel-type propellant (6) consists of inert components, **characterized in that** the propellant chamber (4) is formed by a bag which is flied with the propellant and arranged in a container (1) charged with compressed gas.

2. The rocket motor according to claim 1, **characterized in that** the gel-type propellant (6) is used together with an oxidizer.

3. The rocket motor according to claim 2, **characterized in that** the oxidizer exists in the form of a gel.

4. The rocket motor according to claim 2 or 3, **characterized in that** the oxidizer content is at least 10 percent by weight of the propellant.

5. The rocket motor according to claim 1, **characterized in that** the volume of the propellant chamber (4) for forming a conveying device for the gel-type propellant (6) consisting of inert components can be reduced in size by pressurization from the outside.

6. A booster engine for a flying object having a rocket motor according to any of the preceding claims.

7. The booster engine according to claim 6, **characterized in that** it has a recovery device.

8. The booster engine according to claim 6 or 7, **characterized in that** it has a protection frame (14) inside which the propellant chamber (4), the conveying device for the gel-type propellant (6) and the combustion chamber (10) with the thrust nozzle (11) are mounted.

9. The booster engine according to any of claims 6 to 8, **characterized in that** the combustion chamber (10) with the thrust nozzle (11) is configured in such a way that it can be swivelled.

10. The booster engine according to any of claims 6 to 9, **characterized in that** the combustion chamber (10) with the thrust nozzle (11) can be fixed in more than one orientation.

11. The booster engine according to any of claims 6 to 9, **characterized in that** an external ignition device is used as an ignition device for the gel-type propellant (6) fed into the combustion chamber (10).

12. The booster engine according to claim 11, **characterized in that** the ignition device is formed by a gas burner (21).

## Revendications

1. Moteur de fusée comportant une chambre de carburant (4) remplie de carburant (6) en forme de gel et un dispositif de transport pour transporter le carburant depuis la chambre de carburant (4) jusqu'à la chambre de combustion (10), le carburant (6) en forme de gel étant formé par un carburant sur la base d'au moins un hydrocarbure liquide à température ambiante contenant au moins un groupe nitro, auquel est mélangé un agent gélifiant, et le dispositif de transport pour le carburant (6) en forme de gel étant constitué par des composants inertes, **caractérisé en ce que** la chambre de carburant (4) est formée par une poche remplie de carburant qui est agencée dans un récipient (1) qui est sollicité par du gaz sous pression.

2. Moteur de fusée selon la revendication 1, **caractérisé en ce que** le carburant (6) en forme de gel est utilisé conjointement avec un oxydant.

3. Moteur de fusée selon la revendication 2, **caractérisé en ce que** l'oxydant est en forme de gel.

4. Moteur de fusée selon la revendication 2 ou 3, **caractérisé en ce que** la part de l'oxydant est d'au moins 10 % en poids du carburant.

5. Moteur de fusée selon la revendication 1, **caractérisé en ce que** pour former un dispositif de transport constitué par des composants inertes pour le carburant (6) en forme de gel, le volume de la chambre de carburant (4) peut être réduit depuis l'extérieur par mise sous pression.

6. Réacteur de lancement pour un objet volant, comportant un moteur de fusée selon l'une des revendications précédentes.

7. Réacteur de lancement selon la revendication 6, **caractérisé en ce qu'**il présente un dispositif de récupération.

8. Réacteur de lancement selon la revendication 6 ou 7, **caractérisé en ce qu'**il présente un cadre de protection (14) dans lequel la chambre de carburant (4), le dispositif de transport pour le carburant (6) en forme de gel et la chambre de combustion (10) sont fixés à la tuyère de propulsion (11).

9. Réacteur de lancement selon l'une des revendications 6 à 8, **caractérisé en ce que** la chambre de combustion (10) avec la tuyère de propulsion (11) est réalisée de manière à pouvoir pivoter.

10. Réacteur de lancement selon l'une des revendications 6 à 9, **caractérisé en ce que** la chambre de combustion (10) avec la tuyère de propulsion (11) peut être fixée dans plus d'une orientation.

11. Réacteur de lancement selon l'une des revendications 6 à 9, **caractérisé en ce qu'**un dispositif d'allumage externe est utilisé en tant que dispositif d'allumage pour le carburant (6) en forme de gel amené dans la chambre de combustion (10).

12. Réacteur de lancement selon la revendication 11, **caractérisé en ce que** le dispositif d'allumage est formé par un brûleur à gaz (21).
